# EUROPEAN PATENT APPLICATION

(11) **EP 4 757 369 A1**
(43) Date of publication of application: **10.06.2026**
(21) Application number: 24218208.7
(22) Date of filing: 06.12.2024
(51) Int. Cl.: H04W 12/04, H04W 12/041, H04W 12/0471

(54) **KEY ENTITY AND METHOD FOR PROTECTING A KEY ENTITY**

(71) Applicant: Bayerische Motoren Werke Aktiengesellschaft, 80809 München (DE)
(72) Inventor: Hippler, Marco, 81541 München (DE); Fink, Matthias, 81541 München (DE)

(57) **Abstract**

The present document describes a key entity (160) comprising a storage area (166) for storing a digital key (161). The key entity (160) is configured to receive a setup request for setting up a communication channel with a device (110) via a communication link (135) between the device (110) and the key entity (160), wherein the setup request comprises device data that is dependent on a password for setting up the communication channel. Furthermore, the key entity (160) is configured to delay processing of the setup request in accordance to retry duration data that is stored in the storage area (166) of the key entity (160). In addition, the key entity (160) is configured to determine, based on the received device data, whether or not the password is correct, and to reset the retry duration data in dependence on whether the password is determined to be correct or not.

## Description

The present document is directed at controlling a function of a vehicle using a key entity, such as a key card. In particular, the present document is directed at protecting a key entity comprising a digital key that enables the control of a vehicle function.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the engine of the vehicle. The portable device typically comprises a digital key for authentication of the portal device at the vehicle. Such a portable device may be referred to as a digital key device. The digital key may be a CCC (Car Connectivity Consortium) digital key.

A user of a digital key device may share the digital key for controlling the one or more vehicle functions with another digital key entity, notably with a key card. The present document is directed at the technical problem of enabling a safe management of a digital key on a digital key entity, notably on a key card.

The technical problem is solved by each one or the independent claims. Preferred examples are specified in the dependent claims.

According to an aspect a key entity comprising a storage area for storing a digital key is described. The key entity may comprise one or more electronic components. Example key entities are a key card or a key fob or a portable electronic (smart) device. The digital key may be stored within a secure element of the storage area. The storage area may comprise one or more memory slots which are configured to store data, notably retry duration data, in a persistent manner.

The digital key may be a Car Connectivity Consortium, CCC, digital keys, according to the CCC Digital Key Standard, Release 3 or higher. Alternatively, or in addition, the digital key may be a shared digital key derived from a digital key of the device. Alternatively, or in addition, the digital key may be configured to enable the key entity to control one or more vehicle functions of a vehicle.

The key entity may comprise a processor (e.g. as a control unit of the key entity). On the other hand, the key entity typically does not comprise its own power supply. The key entity is typically configured to receive electrical power for operating the storage area and/or for operating the processer exclusively from an external entity (e.g., from a device). The power may be transferred to the key entity via an electromagnetic power transfer scheme. In particular, the power may be transferred to the key entity via a communication link, notably via an NFC communication link.

The key entity is configured to receive a setup request for setting up a (secure) communication channel with a device. The setup request may be received via a communication link between the device and the key entity. As indicated above, the communication link may be an NFC communication link. The setup request comprises device data that is dependent on a password for setting up the communication channel. The device data may comprise a device-side data unit, which may be used by the key entity to generate a shared secret that is known to the device and to the key entity and which may be used for encrypting data that is transmitting via the (secure) communication channel.

The key entity may be configured to set up the communication channel using a password authenticated key exchange, PAKE, scheme, in particular using the SPAKE2+ scheme. The setup request may be part of the PAKE scheme.

Furthermore, the key entity is configured to delay processing of the setup request in accordance to retry duration data that is stored in the storage area of the key entity. The retry duration data may be indicative of the time duration (e.g., a time value) for which processing of the setup request is to be delayed. The key entity may be configured to cause processing of the setup request to start only subsequent to lapse of the time duration that is indicated by the stored retry duration data. Alternatively, or in addition, the key entity may be configured to cause processing of the setup request to last longer by the time duration that is indicated by the stored retry duration data.

Hence, retry duration data may be stored on the key entity, and may be used for delaying processing of a setup request for setting up a communication channel, thereby increasing the duration of brute force attacks for determining the password of the key entity. The key entity may be configured to increase the time duration that is indicated by the retry duration data with an increasing number of non-successful setup processes for setting up the (secure) communication channel. As a result of this, brute force attacks may be rendered substantially impossible.

The key entity may be configured to store the, possibly updated and/or reset, retry duration data in a persistent manner in the storage area such that the retry duration data is not erased by an interruption, in particular by any kind of interruption, of the (electromagnetic) power supply of the key entity (which may be caused, e.g. by briefly increasing the distance between the device and the key entity). By doing this, the reliability for the prevention of brute force attacks may be increased further.

The key entity may be configured to, in particular prior to processing the setup request, update the retry duration data by increasing the time duration that is indicated by the retry duration data, in particular by increasing the time duration by a pre-determined increment value. The updated retry duration data may be written to the storage area. Hence, the key entity may be configured to increase the time duration for each received setup request, thereby providing an increased protection against brute force attacks.

The key entity may be configured to, in particular prior to processing the setup request, verify whether or not the stored retry duration data is indicative of a pre-determined maximum value for the time duration. Updating the retry duration data and writing the updated retry duration data to the storage area may be omitted, if the stored retry duration data is already indicative of the pre-determined maximum value for the time duration. Alternatively, or in addition, updating the retry duration data and writing the updated retry duration data to the storage area may be performed, if, in particular only if, the stored retry duration data is indicative of a value for the time duration that is lower than the pre-determined maximum value.

Hence, the key entity may be configured to limit the time duration that is indicated by the retry duration data to a pre-determined maximum value, thereby preventing the key entity from becoming non-usable (e.g., subsequent to a brute force attack).

The key entity is further configured (notably subsequent to processing the setup request) to determine, based on the received device data, whether or not the password is correct. As indicated above, the device data received from the device may comprise a device-side data unit (which may comprise or be an ephemeral public key). The device-side data unit may have been derived by the device using the card parameter, wherein the card parameter may have been derived by the device using the password and using a pre-determined calculation scheme (in accordance to the PAKE scheme). Hence, the device-side data unit may have been derived by the device using the password and using a pre-determined calculation scheme (in accordance to the PAKE scheme). The key entity may be configured to derive, notably to read, the card parameter from the storage area, and to determine whether or not the password is correct, based on the device-side data unit and based on the card parameter.

Furthermore, the key entity may be configured to reset the retry duration data in dependence on whether the password is determined to be correct or not. Resetting the retry duration data may cause the time duration to be set to a minimum value (e.g., zero). The key entity may be configured to reset the retry duration data to the minimum value if, in particular only if, it is determined that the password is correct. On the other hand, the key entity may be configured to maintain the, possibly updated, retry duration data that is stored in the storage area unchanged, if it is determined that the password is incorrect.

Hence, by using the correct password for setting up the communication channel, the delay for processing a subsequent setup request may be reduced (to zero), thereby ensuring a comfortable use of the key entity by an authorized user.

The key entity may be configured to set up the (secure) communication channel, if it is determined that the password is correct. Furthermore, the key entity may be configured to enable interaction of the device with the digital key that is stored in the storage area via the communication channel.

The storage area of the key entity may comprise N different memory slots for storing the retry duration data, with N>1 (e.g., N>2 or N>5 or N>10). The key entity may be configured to retrieve the retry duration data for delaying processing of the setup request from a first memory slot of the storage area. Furthermore, the key entity may be configured to write the updated retry duration data to a second memory slot of the storage area, which is different from the first memory slot of the storage area. In addition, the key entity may be configured to erase the retrieved retry duration data from the first memory slot of the storage area.

In particular, the key entity may be configured to, for a sequence of N consecutive setup requests, write the updated retry duration data for the respective setup requests sequentially to the N different memory slots of the storage area. Alternatively, or in addition, the key entity may be configured to cause the updated retry duration data for consecutive setup requests to be written to the N different memory slots of the storage area in accordance with a pre-determined distribution, in particular in accordance to a uniform distribution.

Hence, the key entity may be configured to cause the retry duration data in subsequent setup processes to be written to different memory slots of the storage area of the key entity, thereby increasing the lifespan of the key entity in an efficient and reliable manner. In particular, the key entity may be configured to use the N different memory slots in a uniform manner for storing the retry duration data. In other words, each one of the N different memory slots may be used for 1/N of the total number of setup requests.

As indicated above, the key entity may be configured to (notably during processing of the setup request) derive (notably to read) the card parameter from the storage area. Furthermore, a card-side data unit may be determined based on the card parameter. The key entity may be further configured (notably subsequent to processing of the setup request) to send a setup response to the device via the communication link, wherein the setup response comprises the card-side data unit (which may comprise or be an ephemeral public key). As a result of this, both sides of the communication channel, i.e., the device and the key entity, are enabled to derive a shared secret which may be used to provide the (secure) communication channel. In particular, the shared secret may be used for encrypting one or more messages that are transmitted over the (secure) communication channel.

The key entity may be configured to (notably during processing of the setup request) determine a shared secret based on the card-side data unit and based on the device-side data unit comprised within the received device data. Furthermore, the key entity may be configured to determine a first verification value based on the shared secret using a pre-determined calculation scheme, and to send the first verification value within the setup response to the device. As a result of this, the device is enabled to verify (based on the received first verification value and/or based on a first verification value calculated by the device) whether or not the password is correct, thereby enabling the device (if the password is incorrect) to issue another setup request (based on a different password).

The key entity may be configured to (notably subsequent to sending the setup response) receive a second verification value from the device via the communication link. The second verification value may have been determined by the device based on the shared secret. Furthermore, the key entity may be configured to determine whether or not the password is correct, based on the second verification value (e.g., by comparing the received second verification value with the second verification value calculated by the key entity). As a result of this, a particularly secure setup process for setting up a communication channel may be provided.

According to a further aspect, a method for operating a key entity comprising a storage area for storing a digital key is described. The method comprises receiving a setup request for setting up a (secure) communication channel with a device via a communication link between the device and the key entity, wherein the setup request comprises device data that is dependent on a password (of the key entity) for setting up the communication channel. Furthermore, the method comprises delaying processing of the setup request in accordance to retry duration data that is stored in the storage area of the key entity. In addition, the method comprises determining, based on the received device data, whether or not the password is correct, and resetting the retry duration data in dependence on whether the password is determined to be correct or not.

According to a further aspect, a software program is described. The software program may be adapted for execution on a processor and for performing the method steps of the method outlined in the present document when carried out on the processor.

According to another aspect, a storage medium is described. The storage medium may comprise a software program adapted for execution on a processor and for performing the method steps of the method outlined in the present document when carried out on the processor.

According to a further aspect, a computer program product is described. The computer program may comprise executable instructions for performing the method steps of the method outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device;
Fig. 1b shows an example digital key device, notably an owner device and/or a sharer device;
Fig. 1c shows an example key card, as an example for a key entity;
Fig. 2 illustrates an example scenario for sharing a digital key with a key card;
Fig. 3 shows an example process for sharing a digital key with a key card;
Fig. 4 shows an example process for setting up a secure communication channel between a device and a key card;
Fig. 5 shows a flow chart of an example method for setting up a communication channel between a device and a digital key entity; and
Fig. 6 shows a flow chart of an example method for handling a setup request for setting up a communication channel with a key card.

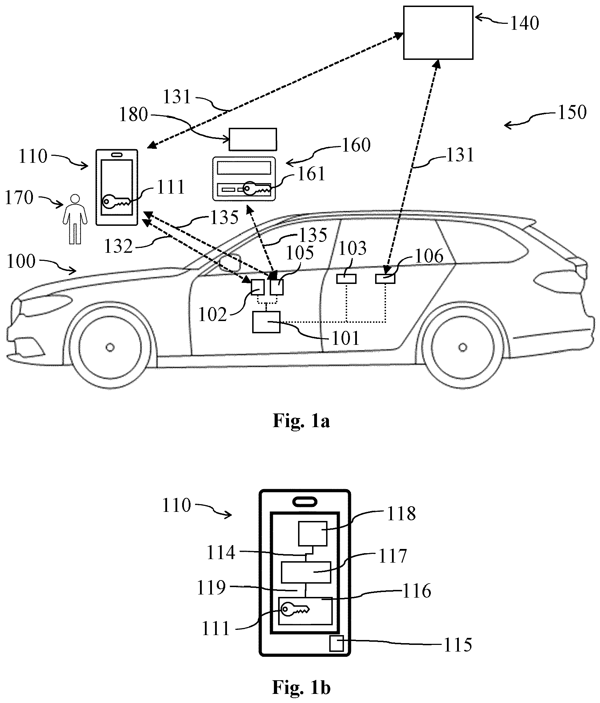

As outlined above, the present document is directed at the technical problem of handling a digital key for controlling one or more functions of a vehicle in a reliable, flexible and/or secure manner. In this context, Fig. 1a shows an example system 150 which comprises a vehicle 100 and at least one digital key device 110. The digital key device 110 may be a portable electronic device, such as a smartphone, a tablet PC, a wearable smart device (such as a smart watch), etc., wherein a digital key 111 is stored on the portable electronic device, notably on a protected memory section (e.g., a secure element) of the portable electronic device. The device 110 typically comprises an integrated power supply, such as a battery, in order to allow the device 110 to be operated in an autonomous manner.

The digital key device 110 may communicate with a communication unit 102, 105 of the vehicle 100 via one or more different wireless communication links 132, 135. Different communication links 132, 135 may be used for different purposes. In particular, a Bluetooth Low Energy (BLE) communication link 132 may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link may be used to determine the location of the device 110 relative to the vehicle 100 in a relatively precise manner. The determination of the location of the device 110 using the UWB communication link may be referred to as UWB ranging.

Alternatively, or in addition, a Near Field Communication (NFC) communication link 135 may be used to provide a short-range communication between the device 110 and the vehicle 100. For establishing the NFC communication link 135, the device 110 may be held in close proximity (e.g. in a distance of less than 10cm) from the communication unit 105 of the vehicle 100.

A control unit 101 of the vehicle 100 may be configured to control at least one vehicle function 103 of the vehicle 100 in dependence of the communication between the device 110 and the vehicle 100. In this context, the digital key 111 of the device 110 may be verified, in particular authenticated. Furthermore, subjected to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 112, 135.

In an example system 150, a BLE communication link 112 may be established between the device 110 and the vehicle 100, once the distance between the device 110 and the vehicle 100 is equal to or less than a certain distance threshold. Once the BLE communication link 112 has been established, the device 110 may be authenticated with the vehicle 100 using the digital key 111 of the device 110. Subject to authentication of the device 110, the device 110 may be enabled to send one or more control commands via the communication link 112 for controlling one or more vehicle functions 103.

The system 150 may comprise a vehicle-server 140 which may e.g. be managed by a manufacturer of the vehicle 100. The device 110 and/or a communication unit 106 of the vehicle 100 may be configured to communication with the vehicle-server 140 via a (wireless) communication link 131 (e.g., a 3G, 4G, 5G or higher communication link).

Fig. 1b shows details of an electronic device 110 (i.e., the digital key device). Fig. 1b shows the secure storage area 116, in particular the so-called "secure element", in which the digital key 111 is stored. The secure storage area 116 typically comprises a digital key (DK) applet that is designed to provide one or more functions (e.g., generating a digital signature) with respect to the digital key 111.

The device 110 may comprise an operating system 117 which is configured to interact with the storage area 116, notably with the DK applet of the storage area 116, via a (secure) data interface 119. The operating system 117 may execute a software application 118, e.g. a software application 118 which is configured to interact with the vehicle-server 140. The operating system 117 may be configured to transfer data between the software application 118 and the operating system 117 via a data interface 114. Furthermore, the device 110 may comprise a communication module 115, notably an NFC communication module, for establishing an NFC communication link 135 with the vehicle 100 or with a key card 160.

The user 170 of the device 110 with the digital key 111 may enable another user and/or another electronic device to control one or more vehicle functions 103. For this purpose, the digital key device 110 may cause a shared digital key to be provided to and/or generated on another electronic device, wherein the shared digital key typically determines the scope of the one or more vehicle functions 103 that can be controlled by the other electronic device. The shared digital key is derived from the digital key 111. In particular, the shared digital key may be a subordinate key of the digital key 111 (within a given public key infrastructure, PKI).

The digital key device 110 (which may also be referred to as the sharer device) may send a transfer request to the vehicle server 140 and/or to the other device via the communication link 131, in order to initiate the creation of a shared digital key on the other device. The transfer request may be signed with the digital key 111 of the digital key device 110. Furthermore, the transfer request may specify a set of one or more vehicle functions 103 that can be controlled by the digital key (i.e., the entitlements of the shared digital key).

Hence, the digital key device 110 may provide information (e.g., the entitlements) which is used for creating a shared digital key for, notably on, the other device (which may be referred to as the receiver device). The receiver device may create the shared digital key (which comprises a key pair with a private key and a public key). The public key (PK) of the shared digital key (along with information such as the entitlements) may be sent to the digital key device 110. The digital key device 110 may sign the PK of the shared digital key (along with the information regarding the shared digital key), e.g. using the private key of the digital key 111. This data forms a first part of the attestation of the shared digital key.

The first part of the attestation may be sent to the vehicle server 140. The vehicle server 140 may verify the first part of the attestation (using the PK of the digital key 111) and may optionally create an immobilizer token (which is typically needed for an engine start of the vehicle 100). Furthermore, the vehicle server 140 may sign a data package comprising the first part of the attestation and/or data added by the vehicle server 140 (using the private key of the central digital key of the vehicle server 140), thereby generating the attestation for the shared digital key. This attestation may be sent to and/or compiled by the receiver device (i.e., the other electronic device). Alternatively, or in addition, the attestation may be sent (by the vehicle server 140) to the vehicle 100.

The attestation may be used by the vehicle 100 to check the authenticity of the shared digital key of the other electronic device. For this purpose, the vehicle 100 uses the digital key 111, notably the public key of the digital key 111, of the digital key device 110, from which the sharing process for creating the shared digital key was initiated. The digital key 111, notably the PK of the digital key 111, of the device 110 may be used to determine the one or more properties of the shared digital key (such as the entitlements of the shared digital key). Furthermore, the central digital key, notably the public key (PK) of the central digital key, of the vehicle server 140 may be used to verify the authenticity of the attestation of the shared digital key of the other electronic device. The central digital key may have been used to sign meta information regarding the shared digital key (such as the receipt of the KTS (key tracking server)).

Typically, the shared digital key (along with other metadata) is comprised within the attestation, such that only the attestation is provided to the vehicle 100 and/or to the other electronic device (within respective messages). From this attestation, the shared digital key can be extracted. As indicated above, the integrity of the attestation may be verified using the (public key of) the central digital key of the vehicle server 140 and/or the (public key of the) digital key 111 from which the shared digital key was derived.

It may be desirable to enable the user 170 of the digital key device 110 to share the digital key 111 with a smart and/or key card 160 (referred to herein as key card) which typically only comprises substantially reduced communication and/or processing capability compared with an electronic device, such as a smartphone. In particular, the key card 160 typically does not comprise its own power supply (e.g., battery), such that the key card 160 cannot be operated autonomously. The key card 160 may be configured to receive electrical power for operating the key card 160 via a communication link 135, notably via an NFC communication link. This may be the only power source for operating the key card 160, i.e., the electronic components of the key card 160.

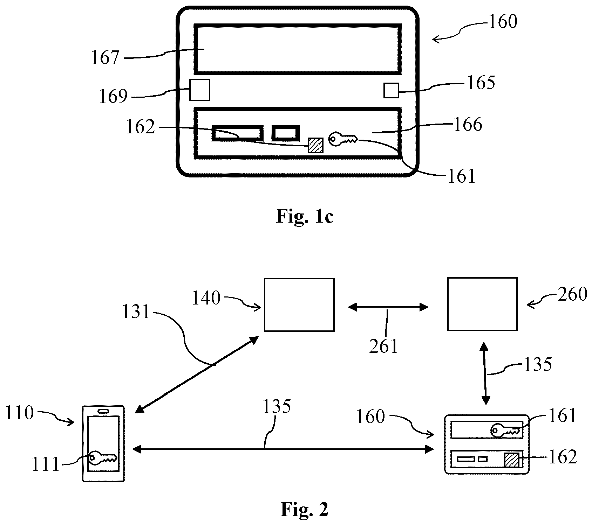

Fig. 1c shows an example key card 160 having a communication module 165, notably an NFC communication module, and a secure storage area 166, notably a secure element, wherein the storage area 166 is configured to store a shared digital key 161 and/or the attestation 162 for the shared digital key 161. Furthermore, the key card 160 may comprise an applet 167 (notably a digital key (DK) applet) which provides a set of commands for interacting with the key card 160, notably with the storage area 166 of the key card 160. The applet 167 may be executed on a processor of the key card 160 (when the key card 160 is provided with electrical energy from an external power source). In addition, the key card 160 may have a code 169, in particular a machine-readable code such as a QR code, printed on the surface of the key card 160. The code 169 may be indicative of a password which may be used for establishing a secure communication channel with the key card 160.

The digital key device 110, notably the owner and/or sharer device, may interact with a key card 160 via a communication link 135, in particular via an NFC communication link, as illustrated in Fig. 2. Hence, the device 110 may be used as an NFC card reader 180 for the key card 160. The communication link 135 may be used to manage, e.g. to share or create, to terminate and/or to delete, the shared digital key 161 on the key card 160.

The key card 160 is typically provided by a key card provider, wherein the key card provider operates a card server 260. The card server 260 and the key card 160 may interact via a communication link 135, notably via an NFC communication link, e.g. in order to install software on the key card 160, such as the digital key applet 167, and/or in order to provide PKI (public key infrastructure) data to the key card 160. Furthermore, data (e.g., one or more secrets) for the PAKE (notably the SPAKE2+) scheme may be written onto the key card 160. The PKI data of the card server 260 is typically independent from the PKI data used by the vehicle server 140 (for the digital key 111). The PKI data on the key card 160 may comprise a key pair for enabling a secure interaction with the key card 160. The card server 260 and the vehicle server 140 may be configured to communicate with one another via a (wireless and/or wireline) communication link 261.

It should be noted that the aspects which are described herein in the context of a key card are applicable in general to a key entity (such as a key card or a key fob or a portable device).

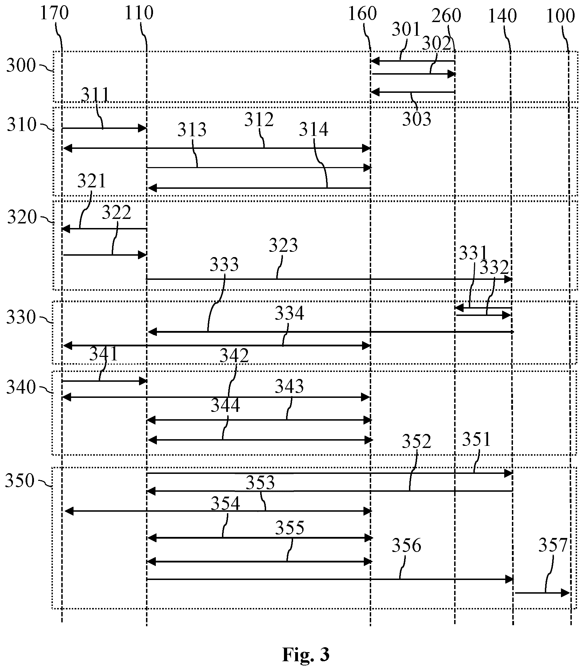

Fig. 3 illustrates an example process for sharing a digital key 111 from a digital key device 110, notably the owner and/or sharer device, to a key card 160. The process involves the digital key device 110, in particular the digital key applet of the device 110, the key card 160, notably the digital key applet 167 of the key card 160, the card server 260, the vehicle server 140 (including a key tracking server (KTS) for tracking one or more shared digital keys 161) and/or the vehicle 100.

In a preparatory phase 300 (which is typically performed by the key card provider), the digital key applet 167 may be provided on the key card 160 (step 301), e.g. via the communication link 135 between the key server 260 and the key card 160. Furthermore, PKI data, notably a so-called instance CA (certificate authority), may be generated on the key card 160. The instance CA may comprise a key pair with a public key PK and a private key SK. Furthermore, a certificate for the instance CA may be provided, wherein the instance CA certificate may be signed by CA of the key server 260 (using a SK of the digital key of the CA of the key server 260), in order to certify the validity of the instance CA (steps 302, 303). As a result of this, the key card 160 may comprise a DK applet 167 which enables the key card 160 to perform actions with regards to a shared digital key 161. Furthermore, the key card 160 may comprise an instance CA with an instance CA certificate, which enables the key card 160 to be identified in a secure manner.

In a subsequent phase 310, the digital key device 110 may identify the key card 160 to which the shared digital key 161 is to be provided. For this purpose, the sharing process (for sharing a digital key 111, 161) may be initiated by the user 170 of the digital key device 110 via a user interface of the digital key device 110 (step 311). The user interface may e.g. be provided by the (vehicle-related) software application 118 running on the digital key device 110. The key card 160 may be placed on the communication unit 105 of the digital key device 110 for establishing a (NFC) communication link 135 between the digital key device 110 and the key card 160 (step 312).

The digital key device 110, notably the DK applet of the device 110, may then request provision of the Instance CA certificate of the key card 160 from the key card 160, notably from the DK applet 167 of the key card 160 (step 313). The key card 160 may then provide the Instance CA certificate to the digital key device 110 (step 314). The Instance CA certificate (possibly in conjunction with one or more further certificates from the key chain of the Instance CA) may be used to identify the key card 160 in a secure and unambiguous manner.

In a subsequent phase 320, the user 170 may be requested to authorize the sharing process for sharing the digital key 111, 161 with the key card 160 which is identified by the Instance CA. For this purpose, the digital key device 110 may generate Hardware Token (i.e., key card) Sharing Data based on the Instance CA certificate of the key card 160 and based on the vehicle identifier of the vehicle 100 (for which the shared digital 161 is to be used), and possibly based on additional information. The Hardware Token Sharing Data may be provided to the vehicle server 140 within a pre-sharing step, in order to enable the vehicle server to identify the key card 160, to which the digital key 111, 161 is to be shared (step 323).

The user may be asked to authorize the transferal of the Hardware Token Sharing Data to the vehicle server 140 via the user interface of the digital key device 110 (steps 321, 322). Subject to authorization by the user, the Hardware Token Sharing Data may be signed by the DK applet of the device 110 (using the private key (SK) of the digital key 111), and the signed Hardware Token Sharing Data may be provided to the vehicle server 140 (step 323). The vehicle server 140 may verify the validity of the instance CA certificate of the key card 160, which is provided within the signed Hardware Token Sharing Data using the digital key 111, notably the PK of the digital key 111, of the digital key device 110.

Once the vehicle server 140 has been informed about the identity of the key card 160, to which the digital key 111 is to be shared, (using the Instance CA of the key card 160) pairing data may be shared, in order to enable the digital key device 110 and the key card 160 to build up a secure communication channel between the device 110 and the key card 160, e.g. for sharing the digital key 111 (phase 330). An ECC (elliptic-curve cryptography)-based pairing algorithm protocol may be used for this purpose, in particular the SPAKE2+ protocol (i.e., the SPAKE2+ scheme). The SPAKE2+ protocol is e.g. described in chapter 18 of the CCC-TS-101 specification (e.g., release 3 or higher). This specification is incorporated herein by reference in its entirety.

The pairing data (notably a password) may be requested by the vehicle server 140 from the card server 260 (step 331) and may subsequently be provided to the vehicle server 140 (step 332). Subsequently, the pairing data (notably the password) may be provided to the device 110 (step 333). Alternatively, or in addition, the password for the pairing protocol may be provided via a code 169 which is visible on the key card 160 (step 334). In general, the password for the pairing protocol may be provided to the user 170 along with the key card 160 (e.g., upon card purchase). The password may be printed on the key card 160 and/or on a paper that is bundled with the key card 160, etc. As a result of this, the device 110 holds the pairing data (notably the password), which may be used to build up a secure communication channel with the key card 160.

In a subsequent phase 340, the pairing data may be used to set up a secure communication channel between the device 110 and the key card 160 for sharing the digital key 111. The user 170 may select the digital key 111 which is to be shared (step 341). Furthermore, the user 170 may select the entitlements of the shared digital key 161 (in particular the entitlements with regards to the one or more vehicle functions 103 that can be controlled using the shared digital key 161).

The user 170 may place the key card 160 onto the device 110 in order to set up a (NFC) communication link 135 between the device 110 and the key card 160 (step 342). Subsequently, the pairing algorithm protocol, notably the SPAKE2+ protocol, may be executed (step 343) using the pairing data (notably the password) that has been provided to the device 110 (step 343). The key card 160 may act as "verifier" within the pairing algorithm protocol. As a result of the pairing algorithm protocol a secure communication channel between the device 110 and the key card 160 is established, which may be used to generate a shared digital key 161 on the key card 160 (step 344). This process may be referred to as the endpoint creation process.

During the endpoint creation process, the shared digital key 161 is generated based on the digital key 111. Furthermore, a certificate for the shared digital key 161 is generated (wherein the certificate may be indicative of the Instance CA of the key card 160 (which is typically the issuer of the shared digital key 161)). The certificate (including the shared digital key 161) may be stored in a memory slot of the storage area 166 of the key card 160, thereby providing a (CCC) endpoint on the key card 160.

Furthermore, the attestation 162 for the shared digital key 161 may be generated by the sharer device 110 (within phase 350). The attestation 162 typically includes
- a key identifier of the shared digital key 161;
- the PK of the shared digital key 161;
- information regarding the validity of the shared digital key 161; and/or
- information regarding the entitlements of the shared digital key 161.

The attestation 162 may be signed by the device 110 (using the SK of the digital key 111). The signed attestation 162 may be sent to the vehicle server 140 (step 351) and the vehicle server 140 may verify the authenticity of the attestation 162 using the PK of the digital key 111. Furthermore, the vehicle server 140 may receive and/or verify the certificate and/or the certificate chain of the shared digital key 161. In addition, the vehicle server 140 may sign the verified attestation 162 using the private key (SK) of the central digital key of the vehicle server 140. Furthermore, the vehicle server 140 may pass the attestation 162 (including the shared digital key 161) to the key tracking server (KTS), thereby enabling tracking of the shared digital key 161.

The signed attestation 162 and/or the receipt of the KTS (signed by the vehicle server 140) may be passed back to the device 110 (step 352), possibly along with an (encrypted) immobilizer token (for enabling the shared digital key 161 to start the engine of the vehicle 100).

Subsequently, the signed attestation 162 may be provided to (and stored on) the key card 160. For this purpose, the user 170 may place the key card 160 onto the device 110 to establish a or to reestablish the communication link 135 (step 353). Furthermore, the pairing algorithm protocol, notably the SPAKE2+ protocol (i.e., scheme), may be executed, to set up a secure communication channel between the device 110 and the key card 160 (step 354). Eventually, the attestation 162 may be written to the key card 160 (step 354). Furthermore, the vehicle server 140 may be informed that the key sharing process is terminated (step 356). In addition, the attestation 162 (including the (PK of the) shared digital key 161) may be sent from the vehicle server 140 to the vehicle 100, thereby enabling the use of the shared digital key 161 for controlling one or more vehicle functions 103 of the vehicle 100.

Hence, for the protection of one or more sensitive commands with regards to the key card 160 (such as the create, terminate and/or delete endpoint command), a PAKE scheme, notably the SPAKE2+ protocol, may be used. When providing a digital key 161 to a key card 160, the device 110 or NFC terminal 180 (in conjunction with the vehicle server 140) takes the active part (server) and the key card acts 160 as the passive part (client).

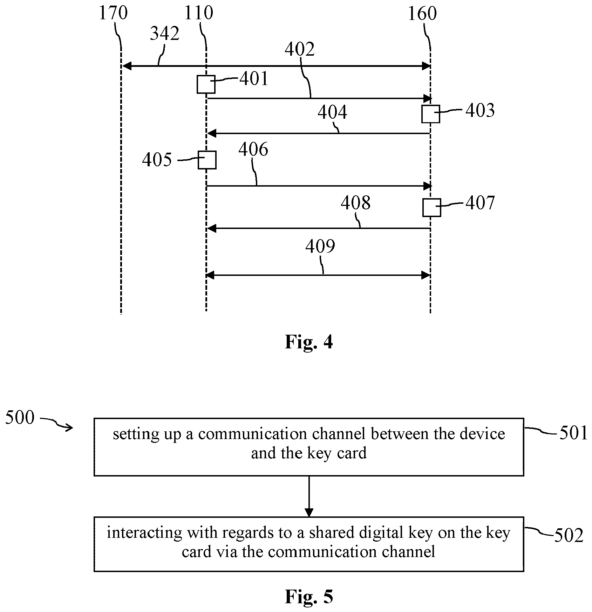

Fig. 5 shows a flow chart of an example (possibly computer-implemented) method 500 for managing a shared digital key 161 on a key card 160, wherein the shared digital key 161 may be used and/or is enabled for controlling one or more vehicle functions 103 of a vehicle 100. The shared digital key 161 is typically derived from the digital key 111 of a sharer device 110. In particular, the shared digital key 161 may be a subordinate key of the digital key 111 within a key chain. The method 500 may be executed by the key card 160 or by the device 110, notably by the sharer device 110.

The method 500 comprises setting up 501 a communication channel, notably a secure communication channel, between the device 110 and the key card 160. The communication channel is typically provided using a (NFC) communication link 135 between the device 110 and the key card 160. For this purpose, the key card 160 may be placed on the device 110 (such that the key card 160 is provided with electrical energy for operating the key card 160, notably for operating the DK applet 167 of the key card 160, by the device 110). The communication channel may be set up using a password authenticated key exchange (PAKE) algorithm, thereby enabling the efficient provision of a secure communication channel.

Furthermore, the method 500 comprises interacting 502 with regards to the shared digital key 161 of the key card 160 via the (secure) communication channel. Interacting 502 may comprise creating, terminating and/or deleting the digital key endpoint for the shared digital key 161.

By making use of a secure communication channel, a particularly secure interaction between the device 110 and the key card 160 may be provided in an efficient manner. The secure communication channel may make use of one or more shared secrets that have been derived by the device 110 and the key card 160 during the setup process for setting up the communication channel.

When using a password mechanism to protect the key card 160, a brute force attack may be used, during which passwords are randomly modified in order to identify the correct password. Attempts with different passwords may be repeated at a relatively high rate, thereby allowing an attacker to identify the password in a relatively short time period. Fig. 4 illustrates a process for setting up a secure communication channel between the device 110 and the key card 160 using a password authenticated key exchange (PAKE) algorithm, which substantially reduces the possibility of determining the correct password of the key card 160 using a brute force attack.

As outlined in the context of Fig. 3, the key card 160 may be placed onto the device 110 in order to set up a (NFC) communication link 135 between the device 110 and the key card 160 (step 342). The device 110 uses the password (e.g., the password which is indicated by the code 169 on the key card 160) to generate one or more parameters (step 401). The one or more parameters may also be generated using an identifier of the device 110 and/or an identifier of the key card 160. The one or more parameters may be w0, w1 and/or L, as specified in chapter 18 of the CCC specification. A so-called Password-Based Key Derivation Function (PBKDF) may be used to generate the one or more parameters. The one or more parameters may at least partially be known by (and stored within the storage area 166 of) the key card 160. These one or more parameters may be referred to as card parameters. The one or more card parameters are typically linked to the password of the key card 160.

The goal of the PAKE algorithm may be to generate a single shared secret between the device 110 and the key card 160 that can be used subsequently for encrypting and/or exchanging data via the secure communication channel. The device 110 may be configured to generate a device-side data unit (notably X) using the one or more parameters (notably (the card parameter) w0) and a random scalar (x). Hence, the device 110 may be configured to generate a device-side data unit (notably X) using the password. The process for generating the device-side data unit (notably X) is described in Listing 18-3 of the CCC-TS-101 specification (e.g., release 3 or higher).

The device-side data unit (notably X) may be sent to the key card 160 (step 402). Furthermore, as indicated above, one or more of the parameters (notably w0) may be known to the key card 160 in advance (thereby enabling the key card 160 to verify whether the device-side data unit that is provided by the device 110 and that has been derived based on the password is valid or not). The key card 160 may be configured to verify whether or not the device-side data unit lies within a set of possible device-side data units. Furthermore, (if the device-side data unit lies within the set of possible device-side data units), the key card 160 may generate a card-side data unit (notably Y) using a random scalar (notably y) and/or using one or more card parameters (notably w0). The process for generating the card-side data unit (notably Y) is described in Listing 18-2 of the CCC-TS-101 specification (e.g., release 3 or higher). The card-side data unit (notably Y) may be provided to the device 110 (step 404).

The key card 160 may use the device-side data unit (notably X) to derive one or more shared secrets (notably CK and/or SK) (within step 403). The device 110 may use the card-side data unit (notably Y) to derive the same one or more shared secrets (notably CK and/or SK). The process for generating the one or more shared secrets (notably CK and/or SK) is described in Listing 18-4 and/or Listing 18-5 of the CCC-TS-101 specification (e.g., release 3 or higher).

Furthermore, the key card 160 may be configured to generate a first verification value (notably M[1]) based on the one or more shared secrets (notably CK) and based on the device-side data unit (notably X) (within step 403). The process for generating the first verification value (notably M[1]) is described in Listings 18-6 and/or 18-7 of the CCC-TS-101 specification (e.g., release 3 or higher). The first verification value (notably M[1]) may be sent to the device 110 (step 404).

The device 110 may be configured to generate a second verification value (notably M[2]) based on the one or more shared secrets (notably CK) and based on the server-side secret (notably Y) (within step 405). The process for generating the second verification value (notably M[2]) is described in Listings 18-6 and/or 18-7 and/or 18-8 of the CCC-TS-101 specification (e.g., release 3 or higher).

The second verification value (notably M[2]) may be sent to the key card 160 (step 406), and the key card 160 may verify the second verification value (notably M[2]) (step 407). The outcome of the verification may be communicated to the device 110 (step 408).

If the verification is successful, the secure communication channel (notably the one or more shared secrets (e.g., CK and/or SK)) may be used for enabling a secure interaction with the key card 160 (step 409).

An attacker (acting as the device 110) may detect in step 405 that the password that has been used within the PAKE process is erroneous. In reaction to this, the PAKE process may be restarted by sending another setup request using a different password (in accordance to step 402). This may be repeated until the correct password has been identified.

The key card 160 may be configured to progressively increase the duration of each PAKE process, in order to render such brute force attacks for identifying the password inefficient and possibly impossible. For this purpose, the key card 160 may be configured to store retry duration data within the storage area 166 of the key card 160. The retry duration data may have the function of a retry timer that defines the duration of each PAKE process and/or the time interval between two directly succeeding PAKE processes. Alternatively, or in addition the retry duration data may be indicative of the time duration that is added to each individual PAKE process, in order to slow down the execution of the PAKE process.

Hence, the retry duration data may be indicative of an additional time duration for the execution of the PAKE process. The additional time duration may have an initial value, e.g. zero, for a first execution of the PAKE process. The key card 160 may be configured to increase the additional time duration at each (non-successful) execution of the PAKE process, e.g. until a maximal value is reached.

The additional time duration may then stay at the maximum value for each further (non-successful) execution of the PAKE process. On the other hand, the additional time duration may be set to the initial value, subsequent to a successful execution of the PAKE process. By doing this, an authorized user 170 is not (substantially) affected by the (possible) increase of the time duration of the PAKE process.

The key card 160 may be configured to verify the retry duration data in step 403. Furthermore, the key card 160 may be configured to delay the response to the device 110 (as of step 404) in accordance to the retry duration data (notably in accordance to the additional time duration that is indicated by the retry duration data).

Furthermore, the retry duration data may be updated (within step 403). In particular, the additional time duration may be increased by a certain increment value (if the maximum value has not been reached yet). On the other hand, if the maximum value has been reached, the additional time duration may stay at the same value. The updated retry duration data may then be stored within the storage area 166 of the key card 160. The retry duration data is preferably stored in a persistent manner, such that the retry duration data cannot be erased and/or reset by a malicious user, e.g. by interrupting the power supply to the key card 160.

Furthermore, the key card 160 may be configured to reset the retry duration data (within step 407), if the verification of the (second) verification value has been successful. In particular, the additional time duration may be set to the initial value. The updated (notably the reset) retry duration data may be stored in the storage area 166 (in a persistent manner).

Hence, in order to prevent brute force attacks for SPAKE2+ password protected key card 160, the key card 160 may be configured to provide a reliable barrier to an attacker and to protect the key card 160 itself from physical damage (that may be caused by a relatively high processing load).

After receiving a SPAKE2+ REQUEST command (i.e., a setup request) (within step 402), the key card 160 may check the current retry duration data (notably the current setting of a retry timer). The retry timer may be used to delay successive attempts. If the retry timer setting is lower than the maximum timer value (wherein the maximum value may e.g. be set during card manufacturing) the retry timer is increased to the next higher setting (by a pre-determined increment value). This updated setting of the retry timer may take effect (only) for a subsequent execution of the SPAKE2+ REQUEST command. For the current SPAKE2+ REQUEST command, the setting of the retry timer prior to the increase may be used.

In order to prevent attacks that toggle the electromagnetic field of the NFC communication link 135, in order to bypass the enforced delay caused by the retry timer, the retry timer value is preferably persistently stored within the storage area 166 of the key card 160.

In case the retry timer value is already at the defined maximum value, the write operation (for writing the updated retry timer to the storage area 166) may be omitted, thereby increasing the lifespan of the key card 160 (as the cumulated number of write operations is reduced). By way of example, the storage area 166 of a typical key card 160 may be limited to a maximum of about 10000 write and erase cycles.

Subsequent to a time delay in accordance to the retry timer value, the key card 160 may execute the SPAKE2+ algorithm for the received SPAKE2+ REQUEST command.

Subsequent to receiving a SPAKE2+ VERIFY command (in Step 406) and subsequent to a successful verification of the SPAKE2+ evidence, i.e. the verification value M[2], (which indicates that the used password was correct), the key card 160 may reset the retry timer value back to the initial value (e.g., 0).

The mechanism which is described herein, makes use of two write operations to the storage area 166 of the key card 160 for each established secure communication channel. In order to reduce the load of a particular memory slot of the storage area 166 for the write and/or erase operations of the retry duration data (notably of the retry timer), multiple (notably N) different memory slots of the storage area 166 may be used at subsequent PAKE process executions. The following rules may be applied to reduce the load,
- only a single memory slot may be used at each execution of the PAKE process for storing the (updated) retry duration data; the one or more other memory slots may be in an erase state (e.g. 0xFF); and/or
- when writing updated retry duration data, a different memory slot than the previous memory slot may be used for storing the updated retry duration data, and the previous memory slot (which was used for storing the non-updated retry duration data) may be erased; by way of example the memory slot next to the previous memory slot may be used for writing the updated retry duration data.

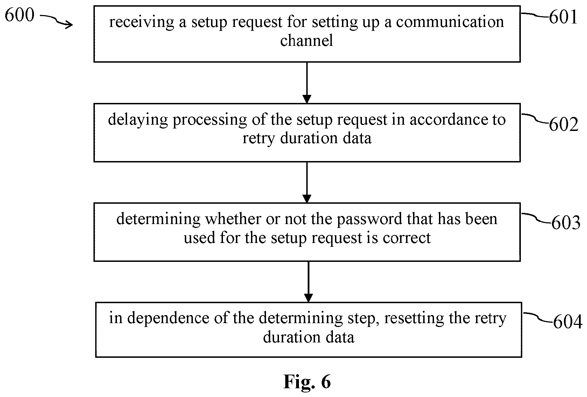

Fig. 6 shows a flow chart of an example (possibly computer-implemented) method 600 for operating a key entity 160 comprising a storage area 166 for storing a digital key 161 (notably a shared digital key). The digital key 161 may be configured to enable the key entity 160 for controlling one or more vehicle functions 103 of a vehicle 100. The method 600 may be directed at setting up a (secure) communication channel for interacting with the digital key 161. The method 600 may be executed by a control unit of the key entity 160.

The method 600 comprises receiving 601 a setup request (notably a SPAKE2+ REQUEST command) for setting up a communication channel with a device 110. The setup request may be received via a communication link 135 (notably an NFC communication link) between the device 110 and the key entity 160. The setup request comprises device data that is dependent on a password (of the key entity 160) for setting up the communication channel. The device data may comprise a device-side data unit that has been derived by the device 110 using the password and using a pre-determined calculation scheme (wherein the calculation scheme may be defined by the SPAKE2+ process).

Furthermore, the method 600 comprises delaying 602 processing of the setup request in accordance to retry duration data that is stored in the storage area 166 of the key entity 160. The retry duration data may be indicative of the time duration by which the processing is to be delayed. Start of processing may be delayed or the overall duration of the processing may be delayed in accordance to the retry duration data.

The method 600 further comprises determining 603, based on the received device data (in particular based on the device-side data unit and based on a card parameter that is stored on the key entity 160), whether or not the password is correct. The card parameter may by linked to the password that is known to the device 110. In particular, the card parameter may be such that the card parameter can be derived by the device 110 using the password and using a pre-determined calculation scheme (wherein the calculation scheme may be defined by the SPAKE2+ process).

In addition, the method 600 comprises resetting 604 the retry duration data in dependence on whether the password is determined to be correct or not. The reset of the retry duration data may cause the time duration to be set to a minimum value (e.g., zero).

The features described herein allow attacks against a key entity 160 to be prevented in an efficient and reliable manner, e.g., attacks in public areas where an attacker can approach a victim without being noticed (e.g. within a queue) or where an attacker is sitting next to the victim (e.g. in public transportation) while the victim is carrying a key entity 160).

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A key entity (160) comprising a storage area (166) for storing a digital key (161); wherein the key entity (160) is configured to
- receive a setup request for setting up a communication channel with a device (110) via a communication link (135) between the device (110) and the key entity (160); wherein the setup request comprises device data that is dependent on a password for setting up the communication channel;
- delay processing of the setup request in accordance to retry duration data that is stored in the storage area (166) of the key entity (160);
- determine, based on the received device data, whether or not the password is correct; and
- reset the retry duration data in dependence on whether the password is determined to be correct or not.

2. The key entity (160) of claim 1, wherein
- the retry duration data is indicative of a time duration for which processing of the setup request is to be delayed; and
- the key entity (160) is configured to, in particular prior to processing the setup request,
- update the retry duration data by increasing the time duration that is indicated by the retry duration data, in particular by increasing the time duration by a pre-determined increment value; and
- write the updated retry duration data to the storage area (166).

3. The key entity (160) of claim 2, wherein the key entity (160) is configured to, in particular prior to processing the setup request,
- verify whether or not the stored retry duration data is indicative of a pre-determined maximum value for the time duration; and
- omit updating the retry duration data and writing the updated retry duration data, if the stored retry duration data is already indicative of the pre-determined maximum value for the time duration; and/or
- update the retry duration data and write the updated retry duration data, if, in particular only if, the stored retry duration data is indicative of a value for the time duration that is lower than the pre-determined maximum value.

4. The key entity (160) of any of claims 2 to 3, wherein
- the storage area (166) comprises N different memory slots for storing the retry duration data, with N>1; and
- the key entity (160) is configured to
- retrieve the retry duration data for delaying processing of the setup request from a first memory slot of the storage area (166);
- write the updated retry duration data to a second memory slot of the storage area (166), which is different from the first memory slot of the storage area (166); and
- in particular, erase the retrieved retry duration data from the first memory slot of the storage area (166).

5. The key entity (160) of claim 4, wherein the key entity (160) is configured to
- for a sequence of N consecutive setup requests, write the updated retry duration data for the respective setup requests sequentially to the N different memory slots of the storage area (166); and/or
- cause the updated retry duration data for consecutive setup requests to be written to the N different memory slots of the storage area (166) in accordance to a pre-determined distribution, in particular in accordance to a uniform distribution.

6. The key entity (160) of any previous claim, wherein the key entity (160) is configured to
- reset the retry duration data to the minimum value if, in particular only if, it is determined that the password is correct; and/or
- maintain the, possibly updated, retry duration data that is stored in the storage area (166) unchanged, if it is determined that the password is incorrect.

7. The key entity (160) of any previous claim, wherein the key entity (160) is configured to store the, possibly updated and/or reset, retry duration data in a persistent manner in the storage area (166) such that the retry duration data is not erased by an interruption, in particular by any kind of interruption, of the power supply of the key entity (160).

8. The key entity (160) of any previous claim, wherein
- the retry duration data that is stored in the storage area (166) is indicative of a time duration for which processing of the setup request is to be delayed; and
- the key entity (160) is configured to
- cause processing of the setup request to start only subsequent to lapse of the time duration that is indicated by the stored retry duration data; and/or
- cause processing of the setup request to last longer by the time duration that is indicated by the stored retry duration data.

9. The key entity (160) of any previous claim, wherein the key entity (160) is configured to set up the communication channel using a password authenticated key exchange, PAKE, scheme, in particular using the SPAKE2+ scheme.

10. The key entity (160) of any previous claim, wherein
- the device data received from the device (110) comprises a device-side data unit that has been derived by the device (110) using a card parameter, wherein the card parameter has been derived by the device (110) using the password and using a pre-determined calculation scheme; and
- the key entity (160) is configured to
- derive the card parameter from the storage area (166); and
- determine whether or not the password is correct, based on the device-side data unit and based on the card parameter.

11. The key entity (160) of any previous claim, wherein the key entity (160) is configured to,
- during processing of the setup request, derive a card parameter from the storage area (166), and determine a card-side data unit based on the card parameter; and
- subsequent to processing of the setup request, send a setup response to the device (110) via the communication link (135), wherein the setup response comprises the card-side data unit.

12. The key entity (160) of claim 11, wherein the key entity (160) is configured to,
- during processing of the setup request, determine a shared secret based on the card-side data unit and based on a device-side data unit comprised within the received device data;
- determine a first verification value based on the shared secret using a pre-determined calculation scheme; and
- send the first verification value within the setup response to the device (110).

13. The key entity (160) of claim 12, wherein the key entity (160) is configured to,
- subsequent to sending the setup response, receive a second verification value from the device (110) via the communication link (135); and
- determine whether or not the password is correct, based on the second verification value.

14. The key entity (160) of any previous claim, wherein the key entity (160) is configured to
- set up the communication channel, if it is determined that the password is correct; and
- enable interaction of the device (110) with the digital key (161) that is stored in the storage area (166) via the communication channel; wherein
- the digital key (161) is a Car Connectivity Consortium, CCC, digital keys, according to the CCC Digital Key Standard, Release 3 or higher; and/or
- the digital key (161) is a shared digital key derived from a digital key (111) of the device (110); and/or
- the digital key (161) is configured to enable the key entity (160) to control one or more vehicle functions (103) of a vehicle (100).

15. A method (600) for operating a key entity (160) comprising a storage area (166) for storing a digital key (161); wherein the method (600) comprises
- receiving (601) a setup request for setting up a communication channel with a device (110) via a communication link (135) between the device (110) and the key entity (160); wherein the setup request comprises device data that is dependent on a password for setting up the communication channel;
- delaying (602) processing of the setup request in accordance to retry duration data that is stored in the storage area (166) of the key entity (160);
- determining (603), based on the received device data, whether or not the password is correct; and
- resetting (604) the retry duration data in dependence on whether the password is determined to be correct or not.
